# EUROPEAN PATENT APPLICATION

(11) **EP 2 615 300 A1**
(43) Date of publication of application: **17.07.2013**
(21) Application number: 10762707.7
(22) Date of filing: 06.09.2010
(51) Int. Cl.: F03D 9/00, H02M 5/458

(54) **POWER CONVERSION SYSTEM AND ASSOCIATED METHOD**

(71) Applicant: Ingeteam Power Technology, S.A., 48170 Zamudio (Bizkaia) (ES)
(72) Inventor: ZABALETA MAEZTU, Mikel, E-31621 Sarriguren (Navarra) (ES); MARCÉN GOÑI, Francisco Javier, E-31621 Sarriguren (Navarra) (ES); GIRONÉS REMÍREZ, Carlos, E-31621 Sarriguren (Navarra) (ES); SOLÉ LÓPEZ, David, E-31621 Sarriguren (Navarra) (ES)
(74) Representative: Carpintero Lopez, Francisco
(86) International application number: PCT/ES2010/070581
(87) International publication number: WO 2012/032196

(57) **Abstract**

It allows connecting or disconnecting polyphase conversion stages (2a, 2b), comprising at least two polyphase back-to-back conversion stages (2a, 2b) connected between a rotary electric machine (3) and the power grid (4), each of these stages having two converters and one DC bus (6a, 6b); at least as many switching cells in each phase as there are conversion stages (2a, 2b), wherein at least one of the cells is associated to each of the conversion stages (2a, 2b); cut-off means (7) between the DC buses (6a, 6b) of the at least two polyphase conversion stages (2a, 2b); cut-off means (8a, 8b) between the at least two conversion stages (2a, 2b) and the rotary electric machine; and cut-off means (9a, 9b) between the at least two polyphase conversion stages (2a, 2b) and the power grid (4).

## Description

### OBJECT OF THE INVENTION

The present invention describes a system for power conversion between a rotary electric machine and the power grid, as well as its method of operation, which allow connecting or disconnecting polyphase conversion stages.

### BACKGROUND OF THE INVENTION

Most electrical installations are formed by electrical machines with a single accessible winding. For example, rotary machines generally have a single stator (or rotor) winding, while transformers generally have a single secondary winding.

In this type of installations, one solution known in the state of the art is to parallelise several power conversion stages so that the plurality of parallelised units behave, for all intents and purposes, as a single power conversion stage equal to the sum of the various parallelised units. However, this setup has the drawback that a failure in one of the power conversion stages will require shutting down the entire installation.

Another known solution is to parallelise the power conversion stages as if they were independent. However, this setup results in recirculation currents between the stages, causing losses and control difficulties.

To avoid these drawbacks, manufacturers need to resort to more complex installations that allow making the various units operate independently (redundancy).

There are many installations that allow using redundancy, the solutions differing according to the topology of the installation in which they will be used. These installations have an electric machine (the rotary machine, transformer or both) with multiple windings in one of their circuits.

Thus, for a rotary machine with a plurality of stator windings, a conversion stage is connected to each of these windings, thereby improving the quality of the current supplied to the machine. In the case of transformers with a plurality of secondary windings, one power conversion stage can be connected for each secondary winding, obtaining an improvement in the quality of the power supplied to the grid. It is even possible depending on the topology of each installation for both conditions to apply simultaneously (plurality of stator windings and plurality of secondary windings).

However, despite the good results obtained by connecting different stages to several windings, electrical machines with multiple windings are more complex, costly and heavy than those having a single winding.

### DESCRIPTION OF THE INVENTION

The invention proposed consists of a system and method for power conversion between a rotary electrical machine and the power grid.

A first aspect of the invention describes a power conversion system comprising at least two polyphase conversion stages of the back-to-back type. A polyphase conversion stage is understood as the assembly formed by two power converters joined by a DC bus. A power converter is understood as the association of switching cells in each phase such that it can be interposed between an AC (Alternating Current) power system and a DC (Direct Current) power system.

In a preferred embodiment, each switching cell in each phase in turn comprises two switching elements in series in which at least the upper terminal, the mid point and the lower terminal are accessible. The invention considers at least two switching cells in each phase, each one associated to a polyphase conversion stage. More preferably, each switching element comprises a transistor with an antiparallel diode.

The system also comprises cut-off means between the DC buses of the polyphase conversion stages, between the polyphase conversion stages and the rotary electric machine and between the polyphase conversion stages and the grid. In a preferred embodiment, the cut-off means are motorised and governed automatically. The cut-off means allow, when necessary, isolating the switching cells of each conversion stage from those of the other conversion stages, allowing the system to operate with less conversion stages than in total.

According to another preferred embodiment, the system comprises at least one controller connected to the cut-off means for controlling its opening/closing. The controller can also be connected to the conversion stages themselves. In one preferred embodiment there is a single controller. In another preferred embodiment there is a redundant system of several controllers.

A second aspect of the invention describes an operating procedure for the system described that comprises the following operations:
- opening the cut-off means that allow isolating at least one of the conversion stages from the other conversion stages;
- continuing normal operation of the other conversion stages.

In normal conditions the system operates with all conversion stages functioning. When an anomaly occurs in any of the conversion stages, or as a function of certain functional criteria, the cut-off elements are acted upon (manually or through at least one controller) to completely isolate the switching cells of the anomalous stage, with the advantage that the remaining switching cells can continue to operate, keeping the system operational. When the reasons that led to its isolation disappear, the procedure also comprises the subsequent operation of closing the cut-off means (manually or through at least one controller) to again connect the switching cells of said conversion stage.

An anomaly is understood as any circumstance or malfunction that causes the system to work better with a reduced number of conversion stages. For example, in case of failure of a semiconducting device, a sensor, or an insulation defect in one of the conversion stages.

The invention also considers the possibility that there is at least one controller present in the installation that can act on the cut-off elements, making the system operate with less conversion stages than in total, based on functional criteria. Examples of these functional criteria are system performance, reliability, component lifetime or any other criteria that can affect the operation of the system.

A set of drawings representing the object of the invention is provided as an integral part of this invention meant to help understand this description, provided for purposes of illustration only and in a non-limiting sense.

### DESCRIPTION OF THE DRAWINGS

Fig. 1 shows a schematic representation of a conversion system according to the present invention.
Fig. 2 shows a non-limiting example of a switching cell according to the invention.

### PREFERRED EMBODIMENT OF THE INVENTION

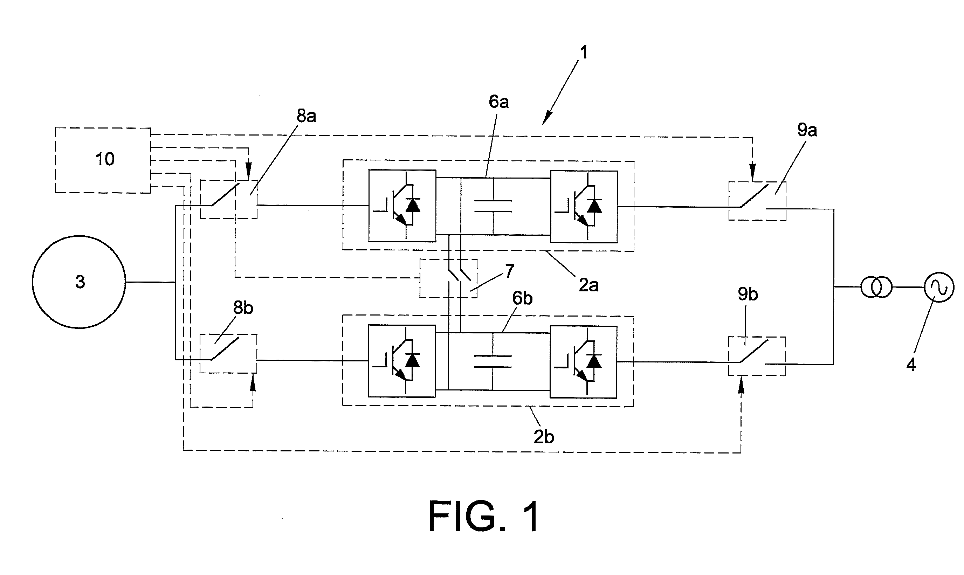

A description of the invention is given below with reference to the accompanying drawings. Fig. 1 shows a schematic representation of an example of system (1) according to the invention with two polyphase conversion stages (2a, 2b) connected between an electric machine (3) and the power grid (4), having at least two switching cells in each phase, each cell being associated to a polyphase conversion stage (2a, 2b).

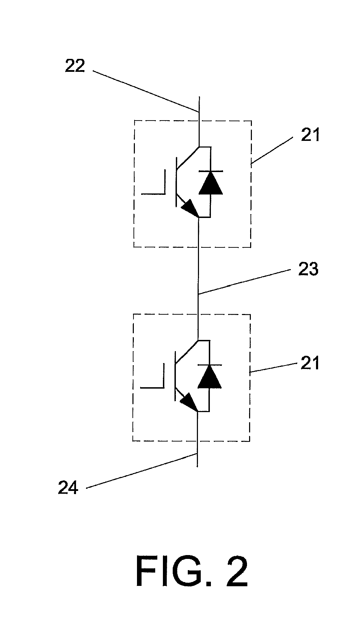

Fig. 2 shows a non-limiting example of a switching cell composed of a pair of switching elements (21) connected in series with at least the upper terminal (22), the mid point (23) and the lower point (24) being accessible. In this example each switching element (21) is a transistor with an antiparallel diode.

The system (1) of the invention further comprises a set of cut-off means (7, 8a, 8b, 9a, 9b) that allow cutting off any of the two polyphase conversion stages (2a, 2b) if required. These are cut-off means (7) arranged on the connection joining the two DC buses (6a, 6b), two cut-off means (8a, 8b) that allow cutting off the conversion stages (2a, 2b) from the electric machine (3) and two cut-off means (9a, 9b) that allow cutting off the conversion stages (2a, 2b) from the power grid (4).

Finally, the system (1) of the invention also comprises a controller (10) connected to the cut-off means (7, 8a, 8b, 9a, 9b) for sending opening or closing commands according to circumstances.

Thus, an example of operation of the system (1) could be the following. If one of the switching cells of the conversion stage (2a) were to operate anomalously (high temperature, irregular switching, etc.) the controller (10) of the system (1), in response to this new state, will send opening commands to the cut-off means (7, 8a, 9a), thereby isolating the first conversion stage (2a). The other conversion stage (2b) will continue to operate normally. Once the problem that caused the anomalous operation of the first conversion stage (2a) is solved, the controller sends closing commands to the cut-off means (7, 8a, 9a) so that the system (1) can operate once again at full yield.

## Claims

1. A power conversion system (1) between a rotary electric machine (3) and the power grid (4), **characterised in that** it comprises:
- at least two polyphase back-to-back conversion stages (2a, 2b) connected between the rotary electric machine (3) and the power grid (4), each one having two converters and an intermediate DC bus (6a, 6b);
- at least as many switching cells in each phase as there are conversion stages (2a, 2b), wherein at least one of the cells is associated to each one of the polyphase conversion stages (2a. 2b);
- cut-off means (7) between the DC buses (6a, 6b) of the at least two polyphase conversion stages (2a, 2b);
- cut-off means (8a, 8b) between the at least two polyphase conversion stages (2a, 2b) and the rotary electric machine (3); and
- cut-off means (9a, 9b) between the at least two polyphase conversion stages (2a, 2b) and the power grid (4).

2. A system (1) according to claim 1, **characterised in that** it additionally comprises at least one controller (10) connected to the cut-off means (7, 8a, 8b, 9a, 9b) to control their opening/closing.

3. A system (1) according to claim 2, **characterised in that** at least one controller (10) is connected to the conversion stages (2a, 2b).

4. A system (1) according to claim 1, **characterised in that** the cut-off means (7, 8a, 8b, 9a, 9b) are motorised and can be governed automatically.

5. A system (1) according to claim 1, **characterised in that** each switching cell in each phase comprises two switching elements (21) in series in which at least an upper terminal (22), a mid point (23) and a lower terminal (24) are accessible.

6. A system (1) according to claim 5, **characterised in that** each switching element (21) is formed by a transistor with an antiparallel diode.

7. An operation method for the system (1) described in any of the previous claims **characterised in that** it comprises the following operations:
- opening the cut-off means (7, 8a, 8b, 9a, 9b) that allow isolating at least one of the conversion stages (2a, 2b) from the other conversion stages (2a, 2b);
- continuing normal operation of the other conversion stages (2a, 2b).

8. An operation method according to claim 7, **characterised in that** it further comprises closing the cut-off means (7, 8a, 8b, 9a, 9b) that allow reconnecting at least one of the isolated conversion stages (2a, 2b) to the other conversion stages (2a, 2b).

9. An operation method according to claims 7 or 8, **characterised in that** the opening and closing commands for the cut-off means (7, 8a, 8b, 9a, 9b) are sent from at least one controller (10).

10. An operation method according to claims 7 or 8, **characterised in that** the opening of the cut-off means (7, 8a, 8b, 9a, 9b) that allow isolating at least one conversion stage (2a, 2b) is performed in response to an anomaly in said conversion stage (2a, 2b).

11. An operation method according to claims 7 or 8, **characterised in that** the opening of the cut-off means (7, 8a, 8b, 9a, 9b) that allow isolating at least one conversion stage (2a, 2b) is performed according to functional criteria.
